# EUROPEAN PATENT APPLICATION

(11) **EP 4 517 422 A1**
(43) Date of publication of application: **05.03.2025**
(21) Application number: 24195328.0
(22) Date of filing: 20.08.2024
(51) Int. Cl.: G03B 3/10, G03B 5/00, G03B 13/36, G02B 7/10, G03B 17/00

(54) **CONTROL APPARATUS, LENS APPARATUS, IMAGE PICKUP APPARATUS, CONTROL METHOD, AND PROGRAM**

(30) Priority: 04.09.2023 JP 2023142632
(71) Applicant: CANON KABUSHIKI KAISHA, Tokyo 146-8501 (JP)
(72) Inventor: UEDA, Masaru, Tokyo 146-8501 (JP)
(74) Representative: TBK

(57) **Abstract**

A control apparatus (105) for a focus lens (104) includes a control unit (105b) that changes, when a position of a magnification varying lens (102) changes during driving of the focus lens, a specified target position of the focus lens to a target position corresponding to the position of the magnification varying lens after a change based on locus information, and change a drive speed of the focus lens so as to reduce a difference between a specified arrival time at which the focus lens is to arrive at the specified target position and calculated arrival time at which the focus lens arrives at the specified target position when the position of the magnification varying lens changes.

## Description

### BACKGROUND

### Technical Field

One of the aspects of the embodiments relates to a control apparatus, a lens apparatus, an image pickup apparatus, a control method, and a program.

### Description of Related Art

Zoom tracking control is known as a technology for reducing fluctuations in the focus position for the same object associated with movement of a magnification varying lens. Japanese Patent Laid-Open No. 2019-66556 discloses a control apparatus configured to drive a focus lens based on a correction amount for zoom tracking control and a correction amount for control that maintains an in-focus state on a moving object. Even when a moving object is imaged during a zoom operation, this control apparatus can maintain the in-focus state on the moving object with high accuracy while reducing focus fluctuations caused by the zoom fluctuation.

The control apparatus disclosed in Japanese Patent Laid-Open No. 2019-66556 cannot realize an operation of gradually focusing on a certain object by slowly zooming in over a predetermined time during moving image capturing.

### SUMMARY

The present disclosure in its first aspect provides a control apparatus as specified in claims 1 to 6.

The present disclosure in its second aspect provides a lens apparatus as specified in claims 7 to 9.

The present disclosure in its third aspect provides an image pickup apparatus as specified in claims 10 to 11.

The present disclosure in its fourth aspect provides a control method as specified in claim 12.

The present disclosure in its fifth aspect provides a program as specified in claim 13.

Further features of various embodiments of the disclosure will become apparent from the following description of embodiments with reference to the attached drawings.

### BRIEF DESCRIPTION OF THE DRAWINGS

FIG. 1 is a configuration diagram of an imaging system according to each example.
FIG. 2 illustrates a relationship between a zoom position and a focus position in each example.
FIGs. 3A and 3B explain a method for calculating an in-focus position of a focus lens according to each example.
FIG. 4 explains drive information for time-specified focus drive in each example.
FIG. 5 explains a locus of time-specified focus drive in a case where the zoom position does not change in each example.
FIG. 6 explains a locus of time-specified focus drive in Example 1.
FIG. 7 is a flowchart illustrating time-specified focus drive control according to Example 1.
FIG. 8 explains a locus of time-specified focus drive in Example 2.
FIG. 9 is a flowchart illustrating time-specified focus drive control according to Example 2.

### DESCRIPTION OF THE EMBODIMENTS

In the following, the term "unit" may refer to a software context, a hardware context, or a combination of software and hardware contexts. In the software context, the term "unit" refers to a functionality, an application, a software module, a function, a routine, a set of instructions, or a program that can be executed by a programmable processor such as a microprocessor, a central processing unit (CPU), or a specially designed programmable device or controller. A memory contains instructions or programs that, when executed by the CPU, cause the CPU to perform operations corresponding to units or functions. In the hardware context, the term "unit" refers to a hardware element, a circuit, an assembly, a physical structure, a system, a module, or a subsystem. Depending on the specific embodiment, the term "unit" may include mechanical, optical, or electrical components, or any combination of them. The term "unit" may include active (e.g., transistors) or passive (e.g., capacitor) components. The term "unit" may include semiconductor devices having a substrate and other layers of materials having various concentrations of conductivity. It may include a CPU or a programmable processor that can execute a program stored in a memory to perform specified functions. The term "unit" may include logic elements (e.g., AND, OR) implemented by transistor circuits or any other switching circuits. In the combination of software and hardware contexts, the term "unit" or "circuit" refers to any combination of the software and hardware contexts as described above. In addition, the term "element," "assembly," "component," or "device" may also refer to "circuit" with or without integration with packaging materials.

Referring now to the accompanying drawings, a detailed description will be given of examples according to the disclosure.

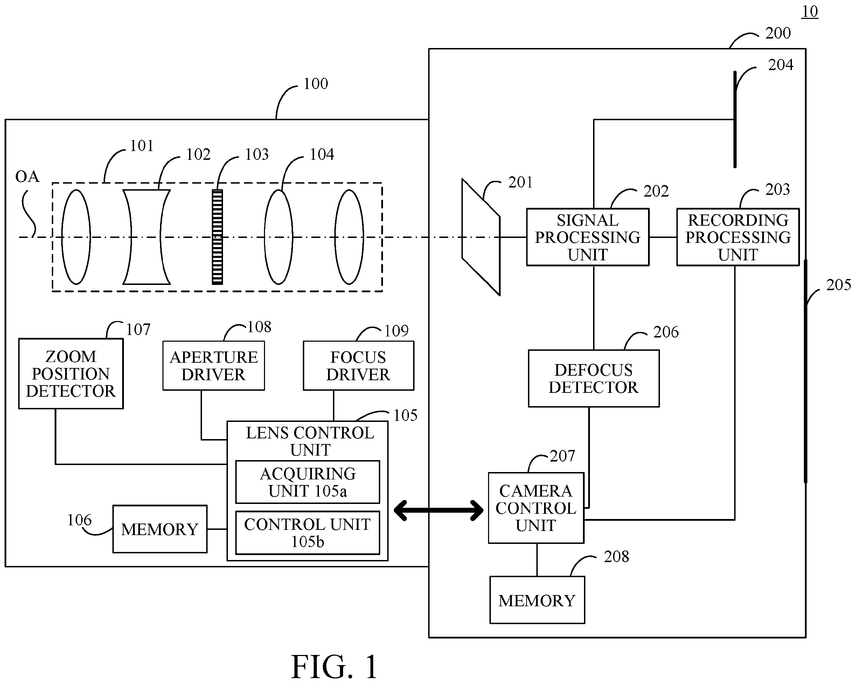

Referring now to FIG. 1, a description will be given of an imaging system 10 according to each example. FIG. 1 is a configuration diagram of the imaging system 10. The imaging system 10 is a lens interchangeable type camera system including a lens apparatus (interchangeable lens) 100 and a camera body (image pickup apparatus) 200 to which the lens apparatus 100 is detachably attached, and can provide still image capturing and moving image capturing. The lens apparatus 100 and the camera body 200 are mechanically and electrically connected via a mount (not illustrated), and power supply and mutual communication between the lens apparatus 100 and the camera body 200 are performed through terminals provided on the mount. Each example is not limited to this type, and is applicable to an image pickup apparatus in which the lens apparatus and the camera body are integrated.

The lens apparatus 100 includes an optical system (zoom lens) 101 configured to form an object image on an image sensor 201 in the camera body 200, and a lens control unit (control apparatus) 105 configured to communicate with a camera control unit 207 in the camera body 200. The optical system 101 includes a magnification varying lens 102, an aperture stop (diaphragm) 103, and a focus lens 104. The magnification varying lens 102 can move along an optical axis OA as the user operates a zoom operation ring (not illustrated). The focal length of the optical system 101 is changed (magnification is varied) as the magnification varying lens 102 moves. The focus lens 104 moves during focusing.

The lens control unit 105 is a computer having a CPU, and is electrically connected to each of a memory (storage unit) 106, a zoom position detector 107, an aperture driver 108, and a focus driver 109. The lens control unit 105 controls driving of the focus lens 104 to reduce focus fluctuations accompanying the movement of the magnification varying lens 102. The lens control unit 105 includes an acquiring unit 105a and a control unit 105b. The acquiring unit 105a acquires locus information about a relationship between the position of the magnification varying lens 102 and the position of the focus lens 104 that is in focus at this position. The control unit 105b drives the focus lens 104 based on drive information including information on a specified target position of the focus lens 104 and information on a specified arrival time. The control unit 105b can acquire the drive information according to the operation of a focus position storing button (operation unit) (not illustrated) of the lens apparatus 100. Alternatively, the control unit 105b may acquire the drive information through communication with the camera body 200.

The memory 106 includes a Read Only Memory (ROM) or a Random Access Memory (RAM), etc., and stores locus information indicating the relationship between the zoom position and the in-focus position of the focus lens 104 that is in focus at the zoom position.

The zoom position detector 107 detects a zoom position using a zoom position sensor such as a variable resistor, and outputs data about the detected zoom position to the lens control unit 105. The data about the zoom position is data about the position of the magnification varying lens 102 or the operated position of the zoom operation ring, but is not limited to these examples. For example, the data about the zoom position may be data about a focal length corresponding to the position of the magnification varying lens 102 or the operated position of the zoom operation ring.

The aperture driver 108 includes an aperture actuator such as a stepping motor or a voice coil motor for driving the aperture stop 103, and an aperture sensor such as a Hall element for detecting the drive position of the aperture stop 103. The focus driver 109 has a focus actuator such as a stepping motor, an ultrasonic motor, or a voice coil motor, and a focus position sensor such as an encoder for detecting the position of the focus lens 104 in the optical axis direction. The aperture actuator of the aperture driver 108 and the focus actuator of the focus driver 109 are controlled by the lens control unit 105 that receives an aperture drive command or a focus drive command from the camera control unit 207.

The camera body 200 has an image sensor 201, a signal processing unit 202, a recording processing unit 203, an electronic viewfinder (EVF) 204, a display unit 205, a defocus detector 206, the camera control unit 207, and a memory 208.

The image sensor 201 converts light from the optical system 101 (an object image formed by the optical system 101) into an electrical signal by photoelectric conversion and outputs the signal to the signal processing unit 202. In addition to imaging pixels, the image sensor 201 has pixels for detecting an in-focus position. The signal processing unit 202 performs various processing for an input electrical signal, such as amplification, noise removal, and color correction, and outputs image data to the recording processing unit 203. The recording processing unit 203 records the input image data. The recorded image data is displayed on the EVF 204 or the display unit 205.

The defocus detector 206 detects a focus state (in-focus state) of an object image using the image sensor 201. The defocus detector 206 detects a phase difference between a pair of object image signals obtained from light incident on the pixels for detecting the in-focus position of the image sensor 201 through a microlens that divides the pupil, and calculates a defocus amount corresponding to the detected phase difference. The defocus amount is output to the camera control unit 207.

The camera control unit 207 is a computer having a CPU, and is electrically connected to the recording processing unit 203, the defocus detector 206, and the memory 208. The camera control unit 207 reads (loads) and executes a program recorded in the memory 208, and communicates information for autofocus (AF) control with the lens control unit 105. The camera control unit 207 generates a focus drive command using the defocus amount obtained from the defocus detector 206 and the position information of the focus lens 104 obtained from the lens apparatus 100. Each example performs AF control using a phase-difference detecting method, but is not limited to this implementation, and may perform AF control using a contrast detecting method.

The optical system 101 is an inner focus (rear focus) type zoom lens. In the inner focus type zoom lens, in a case where the zoom position is changed (magnification is varied) in a state where a certain object distance is in focus, the image-plane position changes and becomes out of focus. Therefore, in order to correct the change in the image-plane position during the magnification varying operation (zoom operation), the lens control unit 105 drives and controls the focus lens 104 using the locus information stored in the memory 106. Such drive control of the focus lens 104 is called zoom tracking control.

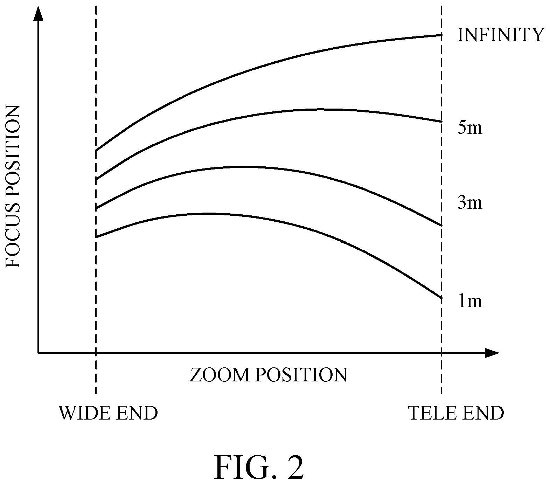

Referring now to FIG. 2, a description will be given of a relationship between a zoom position and a focus position (focus position) of the focus lens 104 that is in focus at the zoom position for each object distance. FIG. 2 illustrates a relationship between the zoom position and the focus position. In FIG. 2, the horizontal axis represents the zoom position and the vertical axis represents the focus position. Each curve illustrated by a solid line in FIG. 2 represents a relationship between the zoom position and the focus position for securing the in-focus accuracy for each object distance. The memory 106 stores a curve as locus corresponding to each of a plurality of representative object distances.

In a case where the object distance coincides with the representative object distance illustrated in FIG. 2, the focus position can be obtained using the locus information corresponding to the representative object distance. On the other hand, in a case where the object distance is different from the representative object distance illustrated in FIG. 2, the focus position can be obtained by calculation (linear interpolation) using locus information corresponding to the representative object distance near the object distance. In each example, the memory 106 stores a curve as locus information, but may store data about representative points that allow these curves to be drawn by approximation.

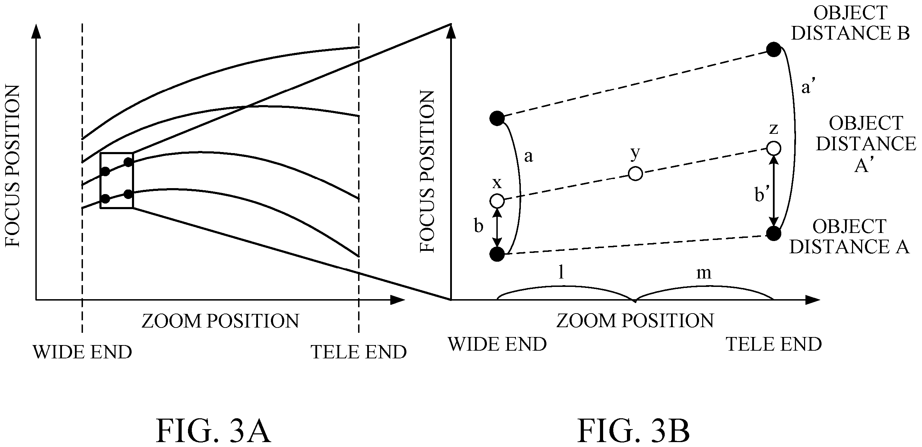

Referring now to FIGs. 3A and 3B, a description will be given of a method for calculating the in-focus position of the focus lens 104 in a case where the object distance is different from the representative object distance. FIGs. 3A and 3B explain a method for calculating the in-focus position of the focus lens 104. In FIGs. 3A and 3B, the horizontal axis represents a zoom (lens) position, and the vertical axis indicates a focus (lens) position. FIG. 3A illustrates the entire locus information, and FIG. 3B illustrates an enlarged view of a part of FIG. 3A (the part enclosed by a frame in FIG. 3A). A description will now be given of a method for calculating a focus position at a zoom position y between a wide-angle side zoom position x and a telephoto side zoom position z at an object distance A' between object distances A and B.

First, data about a focus position at the obj ect distance A and a focus position at the object distance B at the wide-angle side zoom position x are read out, and a ratio b/a between a difference a between focus positions at the object distances A and B and a difference b between focus positions at the object distances A and A' is calculated. Then, using the focus positions at the object distances A and B and the ratio b/a, the focus position at the object distance A' at wide-side zoom position x is calculated.

Next, data about a focus position at the object distance A and a focus position at the object distance B at the telephoto side zoom position z are read out. A ratio b'/a' between a difference a' between focus positions at the object distances A and B and a difference b' between focus positions at the object distances A and A' is the same as the ratio b/a. Then, using the focus positions at the object distances A and B and the ratio b'/a' (=b/a), the focus position at the object distance A' at the telephoto side zoom position z is calculated.

Finally, a zoom moving amount 1, which is a difference between the wide-angle side zoom position x and a zoom position y, and a zoom moving amount m, which is a difference between the zoom position y and the telephoto side zoom position z, are calculated. Then, the focus position at the zoom position y at the object distance A' is calculated using the focus positions at the wide-angle side and telephoto side zoom positions x and z at the object distance A' and a moving amount ratio l/(l+m).

### DRIVE INFORMATION FOR TIME-SPECIFIED FOCUS DRIVING

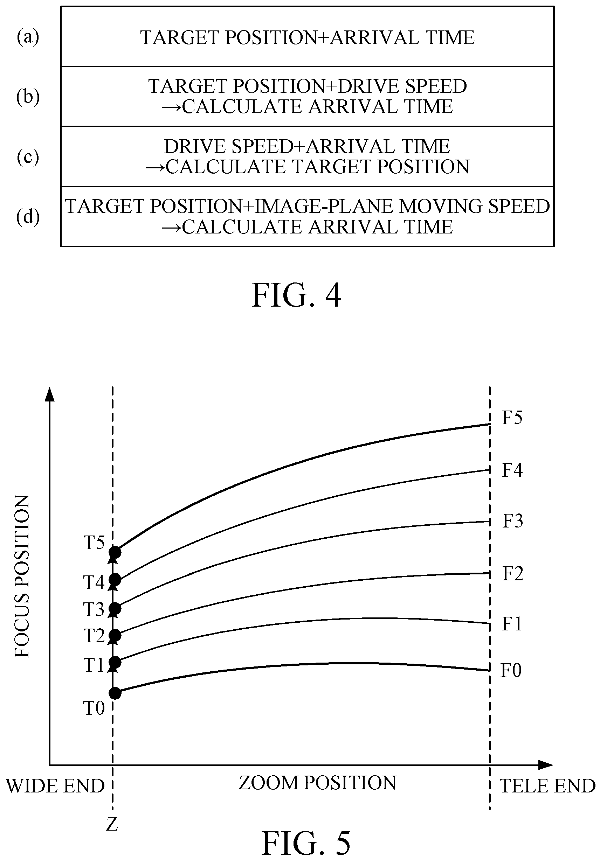

Referring now to FIG. 4, a description will be given of examples (a) to (d) of drive information specified by a time-specified focus drive command. The time-specified focus drive command is transmitted from the camera body 200 to the lens apparatus 100. In each example, the time-specified focus drive refers to the driving the focus lens 104 to a target position in a specified time.

In example (a), a target position (information on the target position) and an arrival time (information on the arrival time) are directly given (specified). In example (b), the target position and a drive speed are given, and the arrival time is calculated using this information. In example (c), the drive speed and the arrival time are given, and the target position is calculated using this information. In example (d), the target position and an image-plane moving speed are given, and the arrival time is calculated using sensitivity information that indicates a relationship between the drive speed of the focus lens 104 and the image-plane moving speed.

In each embodiment, information on the target position or information on the arrival time may include information on the drive speed of the focus lens 104. In this case, the information on the drive speed is information on the moving speed of information on the focus lens 104 or the image-plane moving speed of the object caused by the movement of the focus lens 104.

The information on the specified target position is not limited to a value indicating the physical position of the focus lens 104, and may be indirect information capable of identifying the physical position of the focus lens. The target position may be specified as a value indicating the object position at a certain zoom position (a value corresponding to a specific zoom position). For example, the target position may be specified as the object position at the telephoto end, and may be converted into the physical target position of the focus lens 104 using the current zoom position and locus information within the lens apparatus 100.

The drive information may be specified as a parameter accompanying the drive command, or may be previously specified. For example, a focus position when a focus position storing command is transmitted from the camera body 200 may be stored in the lens apparatus 100, and the focus lens 104 may be driven at a predetermined speed (such as the maximum speed) to the focus position stored by the focus drive command.

Alternatively, the drive information may be specified by communication from the camera body 200, or may be specified by an operating member (operation unit) attached to the lens apparatus 100. For example, the lens apparatus 100 may have an operating member such as a focus position storing button and a playback button, and may store the current focus position in a case where the focus position storing button is pressed, and drive the focus lens 104 to the stored focus position at the determined speed in a case where the playback button is pressed.

### CONTROL OF TIME-SPECIFIED FOCUS DRIVE

Referring now to FIG. 5, a description will be given of a locus of the time-specified focus drive in a case where the zoom position does not change. FIG. 5 illustrates the locus of the time-specified focus drive in a case where the zoom position does not change. In FIG. 5, the horizontal axis represents a zoom position, and the vertical axis represents a focus position. FIG. 5 illustrates a case where the focus lens 104 is driven from position F0 to position F5 from time T0 to time T5. In a case where the times T0 to T5 are equally divided into T1, T2, T3, and T4, the positions where the focus lens 104 is to be at times T1, T2, T3, and T4 are positions F 1, F2, F3, and F4, respectively.

In each example, even if the zoom position fluctuates during the time-specified focus drive, the focus-lens drive speed is updated (changed) so as to drive the focus lens 104 to the specified position in the specified time. A description will now be given of two examples of the method of updating the focus-lens drive speed in a case where the zoom position changes during control of the time-specified focus drive.

### EXAMPLE 1

Example 1 according to the present disclosure will now be described. In this example, the drive speed is updated so as to immediately move the focus lens by the correction amount for the zoom tracking control.

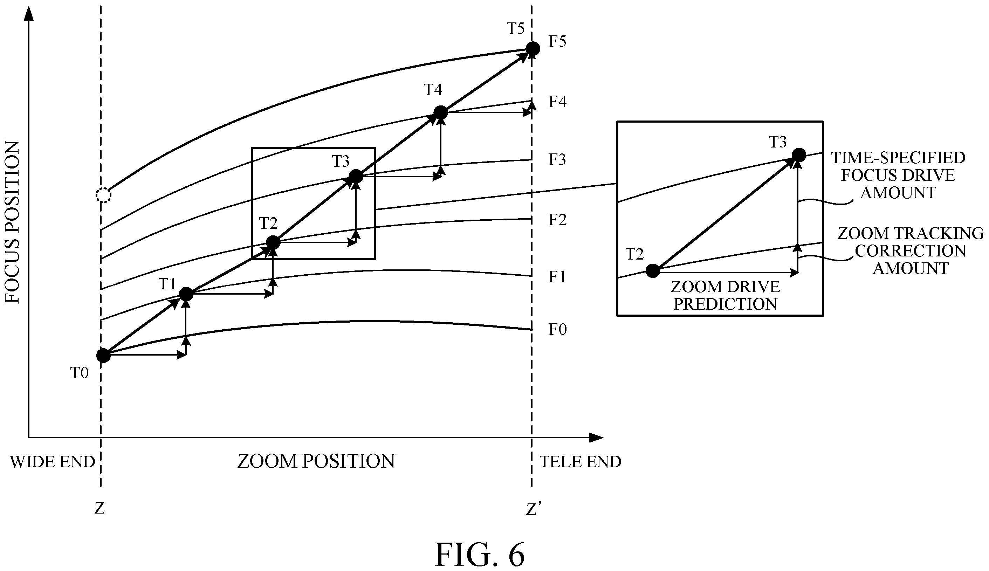

FIG. 6 explains a locus of the time-specified focus drive in this example, and illustrates a method of updating a focus drive speed during the time-specified focus drive. In FIG. 6, the horizontal axis represents a zoom position, and the vertical axis represents a focus position. FIG. 6 illustrates the drive locus in a case where the zoom position moves from position Z to position Z' while the focus position is driven from position F0 to position F5 from time T0 to time T5.

At time T0, the focus lens 104 is at the position F0, and the magnification varying lens is at position Z. Assume that a time-specified focus drive command is sent from the camera body 200, which specifies the target position F5 and the arrival time T5, and that the zoom position is changed at the same time. First, the zoom position at time T1 is predicted using the current zoom position and the past zoom position. The locus information is used to calculate the target position F5 at the predicted zoom position, and a correction drive amount required for the zoom tracking control. A drive amount for the time-specified drive is calculated so that the focus lens is moved by a remaining drive amount excluding the zoom tracking correction drive amount in the remaining time. The drive speed from time T0 to time T1 is determined using the zoom tracking correction drive amount and the drive amount for the time-specified drive of the current cycle. The focus lens 104 is driven at the determined drive speed. After time T1, the focus lens 104 is similarly driven while the drive speed is updated.

Thus, updating the drive speed of the focus lens 104 so as to immediately move it by the correction amount due to zoom tracking can drive the focus lens 104 to the specified position over the specified time while focus fluctuation caused by the zoom fluctuation is reduced.

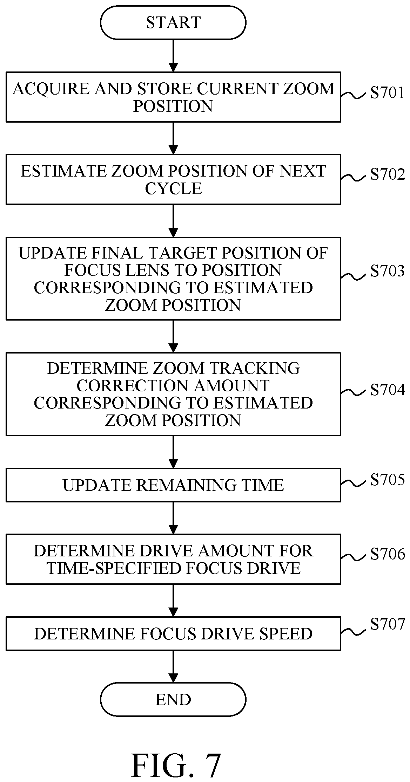

FIG. 7 is a flowchart illustrating the drive speed update processing according to this example. This flow is executed at predetermined time intervals (control cycles) until the time-specified focus drive is completed. The predetermined time may be constant or may change according to a processing state.

First, in step S701, the lens control unit 105 obtains the current zoom position detected by the zoom position detector 107 and stores it in the memory 106. Next, in step S702, the lens control unit 105 estimates the zoom position after a predetermined time (zoom position of the next cycle) using the current zoom position acquired in step S701 and the past zoom position stored in the memory 106.

Next, in step S703, the lens control unit 105 updates the final target position of the focus lens 104 in the time-specified focus drive stored in the memory 106 to a value (position) corresponding to the estimated zoom position. The final target position can be updated using the zoom position after the predetermined time estimated in step S702 and the locus information stored in the memory 106.

Next, in step S704, the lens control unit 105 determines a correction amount for the zoom tracking control after the predetermined time (zoom tracking correction amount corresponding to the estimated zoom position). This correction amount is determined using the zoom position after the predetermined time estimated in step S702 and the locus information stored in the memory 106.

Next, in step S705, the lens control unit 105 updates the remaining time of the time-specified focus drive stored in the memory 106. Next, in step S706, the lens control unit 105 determines the drive amount for the time-specified focus drive using the final target position updated in step S703 and the zoom tracking correction amount determined in step S704.

Next, in step S707, the lens control unit 105 determines the drive speed of the focus lens 104. The drive speed can be determined using the zoom tracking correction amount determined in step S704, the drive amount for the time-specified focus drive determined in step S706, and the remaining time updated in step S705.

As described above, in this example, in a case where the position of the magnification varying lens 102 changes while the focus lens 104 is being driven, the lens control unit 105 (control unit 105b) changes the specified target position to a target position corresponding to the position of the magnification varying lens 102 after the change based on the locus information. Then, the lens control unit 105 changes the drive speed of the focus lens 104 so as to reduce a difference between the specified arrival time and the arrival time in a case where the position of the magnification varying lens 102 changes. The lens control unit 105 may change the drive speed so that the specified arrival time coincides with the arrival time in a case where the position of the magnification varying lens changes.

In a case where the position of the magnification varying lens 102 changes while the focus lens 104 is being driven, the lens control unit 105 may change the drive speed so as to drive the focus lens 104 by the drive amount necessary to reduce focus fluctuation based on the locus information, and drive the focus lens 104 by the remaining drive amount excluding that drive amount in the remaining time. More specifically, assume that a first drive amount is set to a drive amount for zoom tracking correction for a zoom position of the next cycle, and a second drive amount is set to a drive amount for the current cycle to move, in the remaining time, the focus lens 104 by an amount obtained by subtracting the first drive amount from the remaining drive amount to the final target position at the zoom position for the next cycle. Then, the focus lens 104 is driven by the total drive amount of the first drive amount and the second drive amount. That is, the focus fluctuation from the current cycle to the next cycle is predicted, and the focus lens 104 is driven by the correction amount in the current cycle.

### EXAMPLE 2

Example 2 according to the present disclosure will now be described. This example updates the drive speed such that the focus lens 104 is moved by the total drive amount including the correction amount for the zoom tracking control, in the remaining time.

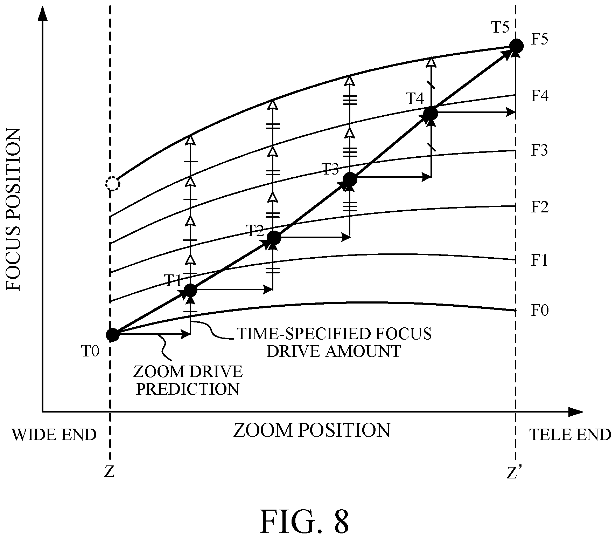

FIG. 8 explains a locus by the time-specified focus drive in this example, and illustrates a method of updating a focus drive speed during the time-specified focus drive. In FIG. 8, the horizontal axis represents a zoom position, and the vertical axis represents a focus position. Similarly to FIG. 6, FIG. 8 illustrates the drive locus in a case where the zoom position moves from position Z to position Z' while the focus (lens) position is driven from position F0 to position F5 in a period from time T0 to time T5.

At time T0, the focus lens 104 is located at position F0, and the magnification varying lens 102 is located at position Z. Assume that a time-specified focus drive command is sent from the camera body 200 to specify a target position F5 and an arrival time T5, and at the same time the zoom position is changed. First, the zoom position at time T1 is predicted using the current zoom position and the past zoom position. The position F5 at the predicted zoom position is obtained using the locus information. The drive speed (focus drive speed) from time T0 to time T1 is determined so that the focus lens 104 is moved by the remaining drive amount to the updated position F5 in the remaining time. The focus lens 104 is driven at the determined drive speed. The drive speed is determined similarly after time T1. In this example, the total remaining drive amount including the correction amount for the zoom tracking control is divided by the remaining time, so the calculation load is smaller than that in Example 1.

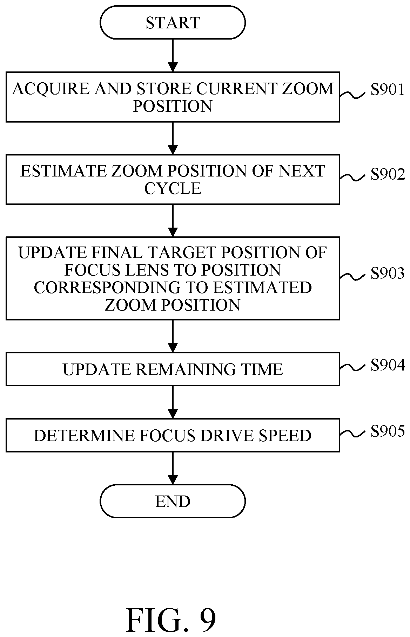

FIG. 9 is a flowchart illustrating the drive speed update processing according to this example. This flow is executed at predetermined time intervals (control cycles) until the time-specified focus drive is completed. The predetermined time may be constant or may change according to the processing state.

First, in step S901, the lens control unit 105 acquires the current zoom position detected by the zoom position detector 107 and stores it in the memory 106. Next, in step S902, the lens control unit 105 estimates the zoom position after the predetermined time (zoom position of the next cycle) using the current zoom position acquired in step S901 and the past zoom positions stored in the memory 106.

Next, in step S903, the lens control unit 105 updates the final target position of the focus lens 104 in the time-specified focus drive stored in the memory 106 to a value (position) corresponding to the estimated zoom position. The final target position can be updated using the zoom position after the predetermined time estimated in step S902 and the locus information stored in the memory 106.

Next, in step S904, the lens control unit 105 updates the remaining time of the time-specified focus drive stored in the memory 106. Next, in step S905, the lens control unit 105 determines the drive speed of the focus lens 104 using the final target position updated in step S903 and the remaining time updated in step S904.

As described above, in this example, in a case where the position of the magnification varying lens 102 changes while the focus lens 104 is being driven, the lens control unit 105 (control unit 105b) changes the specified target position to a target position corresponding to the position of the magnification varying lens 102 after the change, based on the locus information. Then, the lens control unit 105 changes the drive speed of the focus lens 104 so as to reduce a difference between the specified arrival time and the arrival time in a case where the position of the magnification varying lens 102 changes. The lens control unit 105 may change the drive speed so that the specified arrival time coincides with the arrival time in a case where the position of the magnification varying lens changes.

In a case where the position of the magnification varying lens 102 changes while the focus lens 104 is being driven, the lens control unit 105 may change the drive speed so as to drive the focus lens 104 by the remaining drive amount, including the drive amount necessary to reduce focus fluctuation based on the locus information, in the remaining time. In other words, the lens control unit 105 determines the drive speed in the current cycle so as to move the focus lens 104 by the entire remaining drive amount (including the first drive amount for zoom tracking correction for the zoom position in the next cycle) to the final target position corresponding to the position of the magnification varying lens 102 in the next cycle, in the remaining time.

### OTHER EMBODIMENTS

Embodiment(s) of the disclosure can also be realized by a computer of a system or apparatus that reads out and executes computer-executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer-executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer-executable instructions. The computer-executable instructions may be provided to the computer, for example, from a network or the storage medium. The storage medium may include, for example, one or more of a hard disk, a random-access memory (RAM), a read-only memory (ROM), a storage of distributed computing systems, an optical disc (such as a compact disc (CD), digital versatile disc (DVD), or Blu-ray Disc (BD)^{™}), a flash memory device, a memory card, and the like.

While the disclosure has described example embodiments, it is to be understood that some embodiments are not limited to the disclosed embodiments. The scope of the following claims is to be accorded the broadest interpretation so as to encompass all such modifications and equivalent structures and functions.

Each example can provide a control apparatus that can drive a focus lens to a target position within a specified time during zoom tracking control, even if the zoom position changes during driving of the focus lens to a target position in a specified time.

## Claims

1. A control apparatus for a focus lens, the control apparatus comprising:
a control unit configured to:
change, in a case where a position of a magnification varying lens changes during driving of the focus lens, a specified target position of the focus lens to a target position corresponding to the position of the magnification varying lens after a change based on locus information indicating a relationship between the position of the magnification varying lens and a position of the focus lens that is in focus at the position of the magnification varying lens, and
change a drive speed of the focus lens so as to reduce a difference between a specified arrival time at which the focus lens is to arrive at the specified target position and calculated arrival time at which the focus lens arrives at the specified target position in the case where the position of the magnification varying lens changes.

2. The control apparatus according to claim 1, **characterized in that** the control unit changes the drive speed such that the specified arrival time coincides with the arrival time in the case where the position of the magnification varying lens changes.

3. The control apparatus according to claim 1 or 2, **characterized in that** in the case where the position of the magnification varying lens changes during driving of the focus lens, the control unit changes the drive speed such that the focus lens is driven by a drive amount necessary to reduce focus fluctuation based on the locus information, and the focus lens is driven by a remaining drive amount excluding the drive amount in a remaining time.

4. The control apparatus according to any one of claims 1 to 3, **characterized in that** in the case where the position of the magnification varying lens changes during driving of the focus lens, the control unit changes the drive speed such that the focus lens is driven by a remaining drive amount including a drive amount necessary to reduce focus fluctuation based on the locus information, in a remaining time.

5. The control apparatus according to any one of claims 1 to 4, **characterized in that** the control unit uses drive information for driving the focus lens, the drive information including information on the specified target position of the focus lens and information on the specified arrival time,
wherein the information on the specified target position includes a value corresponding to a specific zoom position.

6. The control apparatus according to any one of claims 1 to 5, **characterized in that** the control unit uses drive information for driving the focus lens, the drive information including information on the specified target position of the focus lens and information on the specified arrival time,
wherein the information on the specified target position or the information on the arrival time includes information on the drive speed of the focus lens,
wherein the information on the drive speed includes information on a moving speed of the focus lens, or an image-plane moving speed of an object caused by movement of the focus lens.

7. A lens apparatus (100) comprising:
an optical system (101) including a magnification varying lens and a focus lens; and
the control apparatus (105) according to any one of claims 1 to 6.

8. The lens apparatus according to claim 7, further comprising an operation unit,
**characterized in that** the control unit acquires drive information for driving the focus lens according to an operation of the operation unit, and the drive information includes information on a specified target position of the focus lens and information on specified arrival time at which the focus lens is to arrive at the specified target position.

9. The lens apparatus according to claim 7 or 8, **characterized in that** the control unit acquires the drive information through a communication with an image pickup apparatus.

10. An image pickup apparatus (200) comprising:
an image sensor (201); and
the control apparatus (105) according to any one of claims 1 to 6.

11. The image pickup apparatus according to claim 10, **characterized in that** the control unit acquires the drive information by communication with a lens apparatus that includes the magnification varying lens and the focus lens.

12. A control method for a focus lens (104), the control method comprising the steps of:
changing, in a case where a position of a magnification varying lens (104) changes during driving of the focus lens, a specified target position of the focus lens to a target position corresponding to the position of the magnification varying lens after a change based on locus information indicating a relationship between the position of the magnification varying lens and a position of the focus lens that is in focus at the position of the magnification varying lens, and
changing a drive speed of the focus lens so as to reduce a difference between a specified arrival time at which the focus lens is to arrive at the specified target position and calculated arrival time at which the focus lens arrives at the specified target position in the case where the position of the magnification varying lens changes.

13. A program for causing a computer to execute the control method according to claim 12.
